# EUROPEAN PATENT SPECIFICATION

(11) **EP 3 822 757 B1**
(45) Date of publication and mention of the grant of the patent: **10.09.2025**
(21) Application number: 20198875.5
(22) Date of filing: 30.07.2014
(51) Int. Cl.: G06F 3/0481

(54) **METHOD FOR SETTING BACKGROUND OF UI CONTROL**
VERFAHREN ZUR EINSTELLUNG DES HINTERGRUNDS EINER BENUTZEROBERFLÄCHENSTEUERUNG
PROCÉDÉ DE PARAMÉTRAGE DE L'ARRIÈRE-PLAN D'UNE COMMANDE D'INTERFACE UTILISATEUR (UI)

(43) Date of publication of application: 19.05.2021
(62) Divisional of application: 14898691.2
(73) Proprietor: HUAWEI TECHNOLOGIES CO., LTD., Shenzhen, Guangdong 518129 (CN)
(72) Inventor: Yang, Xiangpo, Shenzhen, Guangdong 518129 (CN)
(74) Representative: Thun, Clemens

(56) References cited:
- EP-A1- 2 665 243
- EP-A2- 2 709 057
- EP-B1- 2 665 243
- CN-A- 103 927 086
- US-A1- 2008 215 999

## Description

### TECHNICAL FIELD

The present invention relates to the field of electronic technologies, and in particular, to a method for setting a background of a UI control.

### BACKGROUND

Currently, a user interface (User Interface, UI) control used by each application of a portable terminal (for example, a mobile phone) basically uses a single invariable picture as a control background, and each manufacturer basically uses a single picture of the manufacturer as a control background. Therefore, disadvantages, such as invariability, monotony, and inflexibility, commonly exist in backgrounds of current UI controls.

Further, CN 103 927 086 A refers to a wallpaper processing method and system and a mobile terminal, and belongs to the field of mobile communication. The method comprises the steps that when it is detected that a desktop wallpaper of the mobile terminal is replaced, fuzzy processing is performed on the desktop wallpaper, and a wallpaper image after fuzzy processing is stored. The stored wallpaper image is set as the background image of UI interfaces of application modules of the mobile terminal.

Further, US 2008/215999 A1 refers to a method for customizing a user interface, wherein a user optionally sets a user interface displayed on a display unit of a mobile telecommunication terminal according to the user's tastes, such that a background screen image selectable by a user, which constitutes the user interface, is placed as a backdrop, and a menu image is overlapped on the background screen image in a transparent or semi-transparent double structure.

### SUMMARY

Embodiments of the present invention provide a method according to claim 1, which can enable the background of the UI control of the terminal to dynamically change as a wallpaper changes, thereby enhancing flexibility and variability of a background image of the UI control. The above mentioned problem is solved by the subject matter of the independent claim 1. Further implementation forms are provided in the dependent claims.

It can be seen from above that, in the embodiments of the present invention, a background of a UI control is set to be dynamically updated and set along with a wallpaper of a terminal. In this way, when the wallpaper of the terminal changes, the background of the UI control may also change in real time. Therefore, flexibility and variability of a background image of the UI control are enhanced in the embodiments of the present invention.

### BRIEF DESCRIPTION OF DRAWINGS

FIG 1 is a schematic flowchart of an embodiment of a method for setting a background of a UI control according to an embodiment of the present invention;
FIG 2a to FIG 2c are schematic principle diagrams of capturing a wallpaper area block from a fuzzy wallpaper according to an embodiment of the present invention;
FIG 3 is a schematic flowchart of another embodiment of a method for setting a background of a UI control according to an embodiment of the present invention;
FIG 4 is a schematic structural composition diagram of an embodiment of an apparatus for setting a background of a UI control according to an embodiment of the present invention;
FIG 5 is a schematic structural composition diagram of another embodiment of an apparatus for setting a background of a UI control according to an embodiment of the present invention;
FIG 6 is a schematic structural composition diagram of another embodiment of an apparatus for setting a background of a UI control according to an embodiment of the present invention;
FIG 7 is a schematic structural composition diagram of another embodiment of an apparatus for setting a background of a UI control according to an embodiment of the present invention; and
FIG 8 is a schematic structural composition diagram of an embodiment of a terminal according to the present invention.

### DESCRIPTION OF EMBODIMENTS

In embodiments of the present invention, a background of a UI control is set to be dynamically updated and set along with a wallpaper of a terminal. In this way, when the wallpaper of the terminal changes, the background of the UI control may also change in real time. Therefore, flexibility and variability of a background image of the UI control are enhanced in the embodiments of the present invention. Furthermore, in the embodiments of the present invention, to avoid performing fuzzy processing on a wallpaper only when a fuzzy wallpaper is acquired each time, when one wallpaper is generated, fuzzy processing may be performed on the generated wallpaper, and the fuzzy wallpaper obtained after the fuzzy processing is cached in internal memory of the terminal or saved in a memory of the terminal. In this way, when a fuzzy wallpaper needs to be acquired to serve as the background of the UI control, the fuzzy wallpaper may be directly acquired and an area block of the fuzzy wallpaper may be captured, so that a processing time for setting, by a system, the background of the UI control can be reduced. Moreover, loss of the internal memory of the terminal may be reduced by using the memory to save the fuzzy wallpaper. Besides, in the embodiments of the present invention, a black mask may also be superposed on the captured wallpaper area to ensure that the UI control on the wallpaper can be normally displayed on a wallpaper of any color. In addition, in the embodiments of the present invention, when a wallpaper area is captured, the whole fuzzy wallpaper may be first sampled, and a size of the wallpaper area captured after the sampling is smaller, which may further reduce the loss of the internal memory of the terminal and save space of the internal memory.

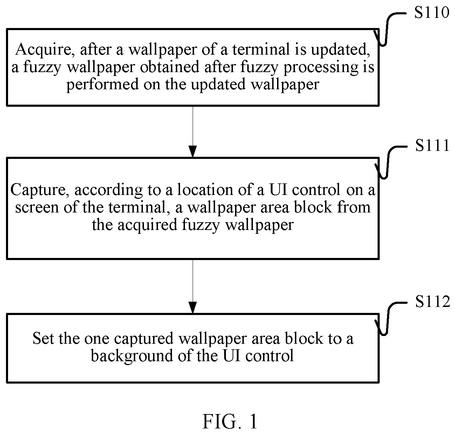

FIG. 1 is a schematic flowchart of an embodiment of a method for setting a background of a UI control according to an embodiment of the present invention. As described in FIG. 1, the method for setting a background of a UI control according to the present invention may include:
Step S110: Acquire, after a wallpaper of a terminal is updated, a fuzzy wallpaper obtained after fuzzy processing is performed on the updated wallpaper.

In specific implementation, the terminal according to this embodiment of the present invention includes any device with a built-in UI control. The device includes, but is not limited to, a mobile phone, a tablet computer, a wearable device, or the like.

In some feasible implementation manners, after the wallpaper of the terminal is updated, in this embodiment of the present invention, fuzzy processing may be performed on the updated wallpaper. In addition, the fuzzy wallpaper obtained after the fuzzy processing may be cached in internal memory of the terminal or saved in a memory of the terminal, so as to acquire the fuzzy wallpaper obtained after fuzzy processing is performed on the updated wallpaper.

In some other feasible embodiments, to avoid performing fuzzy processing on a wallpaper only when a fuzzy wallpaper is acquired each time, in this embodiment of the present invention, when a terminal generates one wallpaper (manufacturing and finishing one wallpaper according to wallpaper software, or downloading one wallpaper from a third party to a terminal, or another manner of enabling a terminal to acquire a wallpaper that the terminal does not have can be understood as generating, by a terminal, one wallpaper), fuzzy processing may be performed immediately on the wallpaper and the fuzzy wallpaper obtained after fuzzy processing may be cached in internal memory of the terminal or saved in a memory of the terminal. In this way, when a fuzzy wallpaper needs to be acquired to serve as the background of the UI control, the fuzzy wallpaper may be directly acquired and an area block of the fuzzy wallpaper may be captured, so that a processing time for setting, by a system, the background of the UI control can be reduced.

In specific implementation, the memory in this embodiment of the present invention may include, but is not limited to, a volatile memory (such as a RAM), a nonvolatile memory (such as a ROM or a flash memory), or a combination thereof.

In specific implementation, the wallpaper of this embodiment of the present invention may include two types, namely, a static wallpaper and a live wallpaper. With regard to a static wallpaper, in step S110, a fuzzy wallpaper obtained after fuzzy processing is performed on an updated static wallpaper can be directly acquired; with regard to a live wallpaper, because the wallpaper is dynamically changeable, in step S110, a fuzzy wallpaper obtained after fuzzy processing is performed on each changing state of an updated live wallpaper can be acquired. For example, if the live wallpaper includes three changing states, which are m1, m2, and m3, respectively, and each changing state corresponds to a wallpaper image of the live wallpaper at a different moment, in step S110, fuzzy wallpapers obtained after fuzzy processing is performed on changing states m1, m2, and m3 of a live wallpaper b separately at three moments may be acquired.

In specific implementation, in this embodiment of the present invention, when fuzzy processing is performed on the wallpaper, Gaussian fuzzy processing, is used. In this embodiment of the present invention, when Gaussian fuzzy processing is performed, with regard to a static wallpaper, image scaling may be performed on the basis of an original image to scale down an image to a fixed size, then Gaussian fuzzy processing is performed on the scaled-down image (from a perspective of mathematics, a process of performing Gaussian fuzzy processing on an image is performing a convolution on the image and normal distribution; because the normal distribution is also referred to as Gaussian distribution, this technique is referred to as Gaussian fuzzy processing), and subsequently, the image obtained after the Gaussian fuzzy processing is recovered to a size of the original wallpaper. Moreover, with regard to a live wallpaper, a wallpaper thumbnail of each changing state of the live wallpaper may be separately captured, image scaling is performed on an image presented by the thumbnail on the basis of an original image to scale down the image to a fixed size, then Gaussian fuzzy processing is performed on the scaled-down image (the principle is the same as the preceding one), and subsequently, the image obtained after the Gaussian fuzzy processing is recovered to a size of the original wallpaper.

It should be understood that in this embodiment of the present invention, after a wallpaper of a terminal is updated, a fuzzy wallpaper obtained after fuzzy processing is performed on the updated wallpaper is acquired. The updating a wallpaper of a terminal includes determining, by the terminal, a to-be-updated wallpaper, that is, once the terminal determines a to-be-updated wallpaper, the terminal can acquire a fuzzy wallpaper obtained after fuzzy processing is performed on the to-be-updated wallpaper. In this case, the terminal may determine only the to-be-updated wallpaper and have not yet updated the wallpaper or be updating the wallpaper, which also falls within the protection scope of this embodiment of the present invention.

Step S111: Capture, according to a location of the UI control on a screen of the terminal, a wallpaper area block from the acquired fuzzy wallpaper.

In specific implementation, the terminal may include one or more UI controls, a location of each UI control on the screen of the terminal may be different, and a location of a same UI control on the screen of the terminal may also change as the time changes.

In specific implementation, in this embodiment of the present invention, when a wallpaper area block is captured from the acquired fuzzy wallpaper according to a location of the UI control on the screen of the terminal, a wallpaper area block at a location corresponding to the location of the UI control may be captured from the acquired fuzzy wallpaper according to a location of the UI control on a touchscreen of the terminal; or, a wallpaper area block at a location that does not correspond to the location of the UI control is captured from the acquired fuzzy wallpaper according to a location of the UI control on a touchscreen of the terminal. A wallpaper area block at a location that does not correspond to the location.

In a feasible implementation manner, in this embodiment of the present invention, after a wallpaper area block is captured from the fuzzy wallpaper in step S111, a black mask may also be superposed on the captured wallpaper area block, so that it can be ensured that the UI control on the wallpaper can be normally displayed on a wallpaper of any color (for example, a pure white wallpaper).

Step S112: Set the one captured wallpaper area block to a background of the UI control.

In specific implementation, in this embodiment of the present invention, one or more wallpaper area blocks may be captured from a fuzzy wallpaper in step S111, and when one wallpaper area block is captured, the wallpaper area block may be directly used in the setting in step S112. When multiple (two or more) wallpaper area blocks are captured, in this embodiment of the present invention, any wallpaper area block of the multiple captured wallpaper area blocks may be set to a background of the UI control in step S112; or, the multiple wallpaper area blocks are set to a background of the UI control one by one according to a preset polling policy. The polling policy may include performing alternation in turn by time. For example, when it is assumed that three wallpaper area blocks (which are f0, f1, and f2, respectively) are captured, a policy of using the three wallpaper area blocks in turn as a background of a control a is: in a time segment t0, the wallpaper area block f0 is used as the background of the control a; in a time segment t1, the wallpaper area block f1 is used as the background of the control a; and in a time segment t2, the wallpaper area block f2 is used as the background of the control a. Alternatively, the polling policy may include performing alternation in turn according to different locations of a UI control. For example, wallpaper area blocks are still f0, f1, and f2, and the policy of performing polling according to the locations may be: when a control a is at a location (x0, y0), the wallpaper area block f0 is used as a background of the control a; when the control a moves to a location (x1, y1), the wallpaper area block f1 is used as the background of the control a; and when the control a is at a location (x2, y2), the wallpaper area block f2 is used as the background of the control a. Alternatively, the polling policy may include any other manner that can implement alternation, for example, for a live wallpaper, because the wallpaper is dynamically changeable, in this embodiment of the present invention, wallpaper area blocks of the live wallpaper in wallpaper states at different moments may be used as alternation materials of a background of a UI control. For example, if wallpaper area blocks of a live wallpaper in a top area of the live wallpaper at three moments, namely, t1, t0, and t2, are f00, f01, and f02, respectively, it may be set: when a control a is at a location (x0, y0), the wallpaper area block f00 is used as a background of the control a; when the control a moves to a location (x1, y1), the wallpaper area block f01 is used as the background of the control a; and when the control a is at a location (x2, y2), the wallpaper area block f02 is used as the background of the control a.

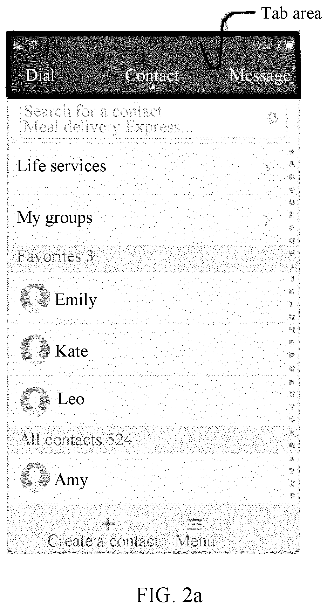

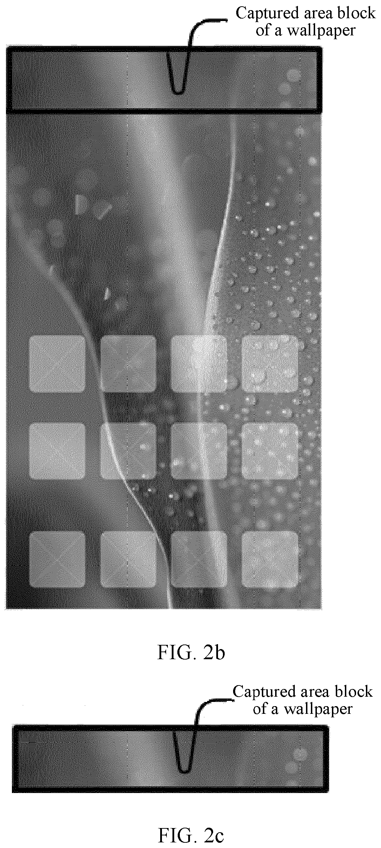

In this embodiment of the present invention, a location of a UI control may be indicated by using absolute coordinates of the UI control on the screen of the terminal or corner coordinates of an area block at which the UI control is located. In addition, a wallpaper area block corresponding to the location of the UI control or a wallpaper area block at a location that does not correspond to the location of the UI control is captured from the fuzzy wallpaper according to the extracted absolute coordinates and corner coordinates. Capturing one wallpaper area block at a corresponding location as the background of the UI control is used below as an example for description. FIG. 2a to FIG. 2c are used as an example, where in FIG. 2a, a tab area is a display area of a UI control of an Android system (this area includes three selection tags, such as Dial, Contact, and Message, as UI controls), and in this example, coordinates of four corners of the tab area may be used to indicate locations of the UI controls of the whole tab area. Therefore, in FIG. 2b, in this embodiment of the present invention, an area enclosed by coordinates that are the same as the coordinates of the four corners of the tab area may be captured from the whole acquired fuzzy wallpaper to serve as a captured wallpaper area block (specifically, an area shown in a black block in FIG. 2b), and a finally captured wallpaper area block corresponding to the tab area is shown in FIG. 2c. A capturing manner by using the absolute coordinates is similar to a capturing manner by using the corner coordinates, and details are not described herein again.

In a feasible implementation manner, in step S112, the one captured wallpaper area block may be called by using a UI control background callback function to serve as the background of the UI control. In specific implementation, the background callback function is a type of function for calling internal data of a terminal, and this background callback function is used for instructing an internal setting module of the terminal to set the one captured wallpaper area block to a background of the UI control. Certainly, in specific implementation, the internal setting module of the terminal may also be instructed by using some other terminal call functions to set the one captured wallpaper area block to a background of the UI control, and the call functions are not described one by one by using examples herein.

It can be seen from above that, in this embodiment, a background of a UI control is set to be dynamically updated and set along with a wallpaper of a terminal. In this way, when the wallpaper of the terminal changes, the background of the UI control may also change in real time. Therefore, flexibility and variability of a background image of the UI control are enhanced in this embodiment of the present invention. Furthermore, in this embodiment of the present invention, to avoid performing fuzzy processing on a wallpaper only when a fuzzy wallpaper is acquired each time, when one wallpaper is generated, fuzzy processing may be performed on the generated wallpaper, and the fuzzy wallpaper obtained after the fuzzy processing is cached in internal memory of the terminal or saved in a memory of the terminal. In this way, when a fuzzy wallpaper needs to be acquired to serve as the background of the UI control, the fuzzy wallpaper may be directly acquired and an area block of the fuzzy wallpaper may be captured, so that a processing time for setting, by a system, the background of the UI control can be reduced. Moreover, loss of the internal memory of the terminal may be reduced by using the memory to save the fuzzy wallpaper. Besides, in the embodiments of the present invention, a black mask may also be superposed on the captured wallpaper area to ensure that the UI control on the wallpaper can be normally displayed on a wallpaper of any color.

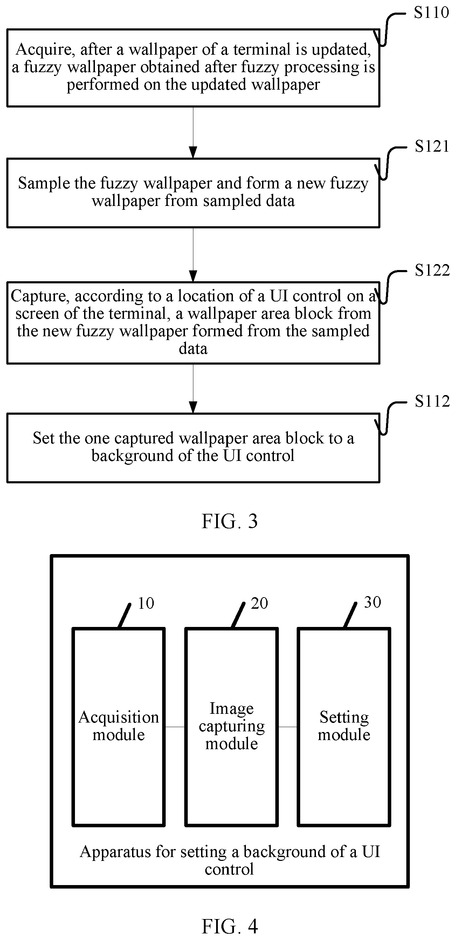

FIG. 3 is a schematic flowchart of another embodiment of a method for setting a background of a UI control according to an embodiment of the present invention. As shown in FIG. 3, a difference between this embodiment and the embodiment shown in FIG. 1 may include:
Steps S121 and S122 are performed after step S110, and then step S112 is further performed.

S121 and S122 are specifically as follows:
Step S121: Sample the fuzzy wallpaper and form a new fuzzy wallpaper from sampled data. In specific implementation, the sampling refers to performing equal-interval or unequal-interval sampling on all pixel points of the fuzzy wallpaper, and a new fuzzy wallpaper is formed from sampled data. An advantage of this step is reducing an overall size of the fuzzy wallpaper used for capturing a wallpaper area block, so as to greatly save space of internal memory.
Step S122: Capture, according to a location of the UI control on a screen of the terminal, a wallpaper area block from the new fuzzy wallpaper formed from the sampled data.

In specific implementation, a manner of capturing a wallpaper area block in step S122 is basically the same as that in step S111, but is different from that in step S111 only in capturing an area block from a new fuzzy wallpaper formed from sampled data, and capturing an area block from a wallpaper that is not sampled. Therefore, specific implementation of step S122 is not described herein again.

Step S110 in this embodiment may be the same as step S110 in FIG. 1, and details are not described herein again.

Step S112 in this embodiment may be the same as step S112 in FIG. 1, and details are not described herein again.

In this embodiment, when a wallpaper area is captured, the whole fuzzy wallpaper is first sampled, and a wallpaper area block is captured from a new fuzzy wallpaper formed from sampled data, so that a size of the wallpaper area block captured after the sampling is smaller, which may further reduce loss of the internal memory of the terminal and save space of the internal memory.

On the basis of the foregoing method embodiment, embodiments of the present invention further provide an apparatus that can be configured to implement the foregoing method embodiment, and an embodiment of the apparatus according to an embodiment of the present invention is described below by using an example.

FIG. 4 is a schematic structural composition diagram of an embodiment of an apparatus for setting a background of a UI control according to an embodiment of the present invention. As described in FIG. 4, the apparatus for setting a background of a UI control according to the present invention may at least include an acquisition module 10, an image capturing module 20, and a setting module 30.

The acquisition module 10 is configured to acquire, after a wallpaper of a terminal is updated, a fuzzy wallpaper obtained after fuzzy processing is performed on the updated wallpaper.

The image capturing module 20 is configured to capture, according to a location of the UI control on a screen of the terminal, a wallpaper area block from the fuzzy wallpaper acquired by the acquisition module 10.

The setting module 30 is configured to set the one wallpaper area block captured by the image capturing module 20 to a background of the UI control.

In specific implementation, the terminal according to this embodiment of the present invention includes any device with a built-in UI control. The device includes, but is not limited to, a mobile phone, a tablet computer, a wearable device, or the like. The apparatus for setting a background of a UI control of this embodiment of the present invention may be an internal apparatus of the terminal or an external apparatus connected to the terminal. When the apparatus for setting a background of a UI control is an external apparatus, the apparatus for setting a background of a UI control may establish a connection to and perform communication with the terminal by using some general device interfaces.

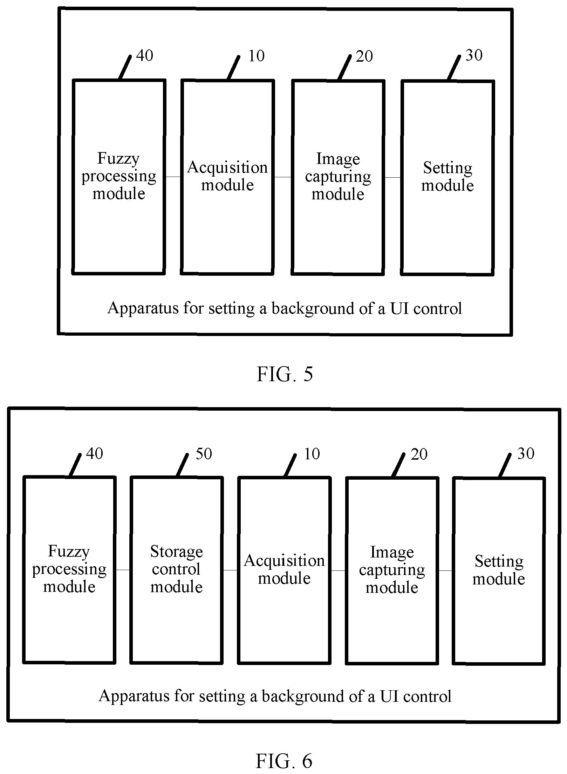

In some feasible implementation manners, as shown in FIG. 5, the apparatus of this embodiment of the present invention may further include: a fuzzy processing module 40, configured to: before the acquisition module 10 acquires, after the wallpaper of the terminal is updated, a fuzzy wallpaper obtained after fuzzy processing is performed on the updated wallpaper, perform fuzzy processing on the updated wallpaper; or, when the terminal generates one wallpaper (manufacturing and finishing one wallpaper according to wallpaper software, or downloading one wallpaper from a third party to a terminal, or another manner of enabling a terminal to acquire a wallpaper that the terminal does not have can be understood as generating, by a terminal, one wallpaper), perform fuzzy processing on the generated wallpaper.

In specific implementation, to avoid performing fuzzy processing on a wallpaper only when a fuzzy wallpaper is acquired each time, in this embodiment of the present invention, when the terminal generates one wallpaper, fuzzy processing may be performed immediately on the wallpaper. In this way, when a fuzzy wallpaper needs to be acquired to serve as the background of the UI control, the fuzzy wallpaper may be directly acquired and an area block of the fuzzy wallpaper may be captured, so that a processing time for setting, by a system, the background of the UI control can be reduced.

In specific implementation, the wallpaper of this embodiment of the present invention may include two types, namely, a static wallpaper and a live wallpaper. With regard to a static wallpaper, the acquisition module 10 may directly acquire a fuzzy wallpaper obtained after fuzzy processing is performed on an updated static wallpaper; with regard to a live wallpaper, because the wallpaper is dynamically changeable, the acquisition module 10 may acquire a fuzzy wallpaper obtained after fuzzy processing is performed on each changing state of an updated live wallpaper. For example, if the live wallpaper includes three changing states, which are m1, m2, and m3, respectively, and each changing state corresponds to a wallpaper image of the live wallpaper at a different moment, the acquisition module 10 may acquire a fuzzy wallpapers obtained after fuzzy processing is performed on changing states m1, m2, and m3 of a live wallpaper b separately at three moments.

In specific implementation, in this embodiment of the present invention, when fuzzy processing is performed on the wallpaper, a common fuzzy processing manner, such as Gaussian fuzzy processing, may be used. The Gaussian fuzzy processing is used as an example. In this embodiment of the present invention, when Gaussian fuzzy processing is performed, with regard to a static wallpaper, image scaling may be performed on the basis of an original image to scale down an image to a fixed size, then Gaussian fuzzy processing is performed on the scaled-down image (from a perspective of mathematics, a process of performing Gaussian fuzzy processing on an image is performing a convolution on the image and normal distribution; because the normal distribution is also referred to as Gaussian distribution, this technique is referred to as Gaussian fuzzy processing), and subsequently, the image obtained after the Gaussian fuzzy processing is recovered to a size of the original wallpaper. Moreover, with regard to a live wallpaper, a wallpaper thumbnail of each changing state of the live wallpaper may be separately captured, image scaling is performed on an image presented by the thumbnail on the basis of an original image to scale down the image to a fixed size, then Gaussian fuzzy processing is performed on the scaled-down image (the principle is the same as the preceding one), and subsequently, the image obtained after the Gaussian fuzzy processing is recovered to a size of the original wallpaper.

In some feasible implementation manners, as shown in FIG. 6, the apparatus for setting a background of a UI control of the embodiments of the present invention further includes:
a storage control module 50, configured to cache the fuzzy wallpaper obtained after the fuzzy processing is performed by the fuzzy processing module 40 in internal memory of the terminal or save the fuzzy wallpaper in a memory of the terminal.

In specific implementation, the memory in this embodiment of the present invention may include, but is not limited to, a volatile memory (such as a RAM), a nonvolatile memory (such as a ROM or a flash memory), or a combination thereof.

In this embodiment of the present invention, an advantage of caching a fuzzy wallpaper in a memory of a terminal is that loss of the internal memory of the terminal can be reduced.

In specific implementation, the terminal may include one or more UI controls, a location of each UI control on the screen of the terminal may be different, and a location of a same UI control on the screen of the terminal may also change as the time changes.

In specific implementation, in this embodiment of the present invention, when the image capturing module 20 captures a wallpaper area block from the acquired fuzzy wallpaper according to a location of the UI control on the screen of the terminal, a wallpaper area block at a location corresponding to the location of the UI control may be captured from the acquired fuzzy wallpaper according to a location of the UI control on a touchscreen of the terminal; or, a wallpaper area block at a location that does not correspond to the location of the UI control is captured from the acquired fuzzy wallpaper according to a location of the UI control on a touchscreen of the terminal.

In specific implementation, in this embodiment of the present invention, the image capturing module 20 may capture one or more wallpaper area blocks from a fuzzy wallpaper, and when one wallpaper area block is captured, the wallpaper area block may be directly used in the setting of the setting module 30. When multiple (two or more) wallpaper area blocks are captured, in this embodiment of the present invention, the setting module 30 may set any captured wallpaper area block to a background of the UI control; or set the multiple captured wallpaper area blocks to a background of the UI control one by one according to a preset polling policy. The polling policy may include performing alternation in turn by time, for example, when it is assumed that three wallpaper area blocks (which are f0, f1, and f2, respectively) are captured, a policy of using the three wallpaper area blocks in turn as a background of a control a is: in a time segment t0, the wallpaper area block f0 is used as the background of the control a; in a time segment t1, the wallpaper area block f1 is used as the background of the control a; and in a time segment t2, the wallpaper area block f2 is used as the background of the control a. Alternatively, the polling policy may include performing alternation in turn according to different locations of a UI control, for example, wallpaper area blocks are still f0, f1, and f2, and the policy of performing polling according to the locations may be: when a control a is at a location (x0, y0), the wallpaper area block f0 is used as a background of the control a; when the control a moves to a location (x1, y1), the wallpaper area block f1 is used as the background of the control a; and when the control a is at a location (x2, y2), the wallpaper area block f2 is used as the background of the control a. Alternatively, the polling policy may be any other manner that can implement alternation, for example, for a live wallpaper, because the wallpaper is dynamically changeable, in this embodiment of the present invention, wallpaper area blocks of the live wallpaper in wallpaper states at different moments may be used as alternation materials of a background of a UI control. For example, if wallpaper area blocks of a live wallpaper in a top area of the live wallpaper at three moments, namely, t1, t0, and t2, are f00, f01, and f02, respectively, it may be set: when a control a is at a location (x0, y0), the wallpaper area block f00 is used as a background of the control a; when the control a moves to a location (x1, y1), the wallpaper area block f01 is used as the background of the control a; and when the control a is at a location (x2, y2), the wallpaper area block f02 is used as the background of the control a.

In this embodiment of the present invention, a location of a UI control may be indicated by using absolute coordinates of the UI control on the screen of the terminal or corner coordinates of an area block at which the UI control is located. In addition, a wallpaper area block corresponding to the location of the UI control or a wallpaper area block at a location that does not correspond to the location of the UI control is captured from the fuzzy wallpaper according to the extracted absolute coordinates and corner coordinates. Capturing one wallpaper area block at a corresponding location as the background of the UI control is used below as an example for description. FIG. 2a to FIG. 2c are used as an example, where in FIG. 2a, a tab area is a display area of a UI control of an Android system (this area includes three selection tags, such as Dial, Contact, and Message, as UI controls), and in this example, coordinates of four corners of the tab area may be used to indicate locations of the UI controls of the whole tab area. Therefore, in FIG. 2b, in this embodiment of the present invention, an area enclosed by coordinates that are the same as the coordinates of the four corners of the tab area may be captured from the whole acquired fuzzy wallpaper to serve as a captured wallpaper area block (specifically, an area shown in a black block in FIG. 2b), and a finally captured wallpaper area block corresponding to the tab area is shown in FIG. 2c. A capturing manner by using the absolute coordinates is similar to a capturing manner by using the corner coordinates, and details are not described herein again.

In a feasible implementation manner, after the image capturing module 20 captures a wallpaper area block from the fuzzy wallpaper, a black mask may also be superposed on the captured wallpaper area block, so that it can be ensured that the UI control on the wallpaper can be normally displayed on a wallpaper of any color (for example, a pure white wallpaper).

In specific implementation, in a feasible implementation manner, the setting module 30 may be specifically configured to set the one captured wallpaper area block to a background of the UI control by using a UI control background callback function. In specific implementation, the background callback function is a type of function for calling internal data of a terminal, and this background callback function is used for instructing an internal setting module of the terminal to set the one captured wallpaper area block to a background of the UI control. Certainly, in specific implementation, the internal setting module of the terminal may also be instructed by using some other terminal call functions to set the one captured wallpaper area block to a background of the UI control, and the call functions are not described one by one by using examples herein.

As described above, in difference embodiments, according to different quantities of one or more wallpaper area blocks captured from the fuzzy wallpaper by the image capturing module 20, the one wallpaper area block used may be different when the setting module 30 sets the one captured wallpaper area block to the background of the UI control.

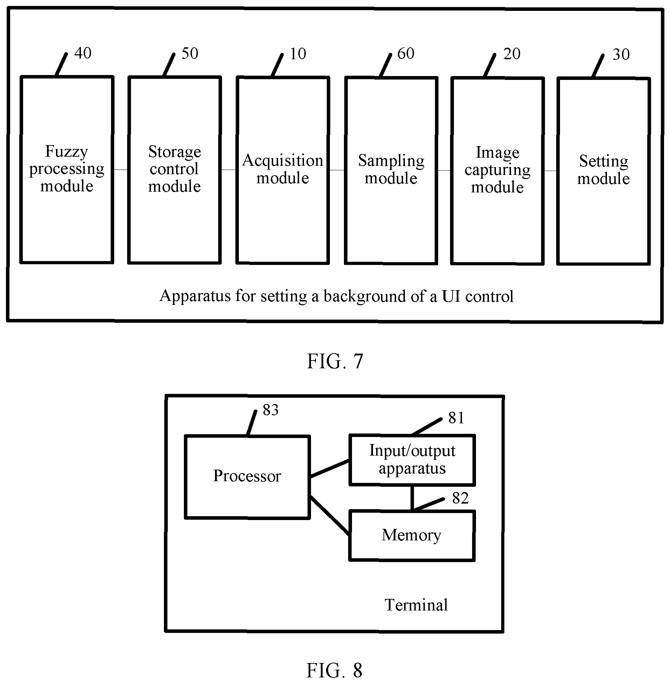

As shown in FIG. 7, in some other feasible implementation manners, the apparatus for setting a background of a UI control according to the present invention may further include:
a sampling module 60, configured to sample the fuzzy wallpaper acquired by the acquisition module 10 and form a new fuzzy wallpaper from sampled data, where
when the image capturing module 20 captures, according to a location of the UI control on a screen of the terminal, a wallpaper area block from the acquired fuzzy wallpaper, the image capturing module 20 captures a wallpaper area block from the new fuzzy wallpaper formed from the data sampled by the sampling module 201. Likewise, when a wallpaper area block is captured from the new fuzzy wallpaper formed from the sampled data, a wallpaper area block at a location corresponding to the location of the UI control may be captured, according to a location of the UI control on a screen of the terminal, from the new fuzzy wallpaper formed from the sampled data; or, a wallpaper area block at a location that does not correspond to the location of the UI control is captured, according to a location of the UI control on a touchscreen of the terminal, from the new fuzzy wallpaper formed from the sampled data.

The image capturing module 20 in FIG. 7 differs from the image capturing module 20 in FIG. 4 merely in capturing an area block from a new fuzzy wallpaper formed from sampled data, and capturing an area block from a wallpaper that is not sampled. However, specific implementations of image capturing of the image capturing module 20 (refer to the description on the image capturing module 20 for details), for example, a manner of using absolute coordinates or corner coordinates of an area bock, are all the same, and details are not described herein again.

It can be seen from above that, the apparatus for setting a background of a UI control of this embodiment of the present invention sets a background of a UI control to be dynamically updated and set along with a wallpaper of a terminal. In this way, when the wallpaper of the terminal changes, the background of the UI control also changes in real time. Therefore, flexibility and variability of a background image of the UI control are enhanced in this embodiment of the present invention. Furthermore, in this embodiment of the present invention, to avoid performing fuzzy processing on a wallpaper only when a fuzzy wallpaper is acquired each time, when one wallpaper is generated, fuzzy processing may be performed on the generated wallpaper, and the fuzzy wallpaper obtained after the fuzzy processing is cached in internal memory of the terminal or saved in a memory of the terminal. In this way, when a fuzzy wallpaper needs to be acquired to serve as the background of the UI control, the fuzzy wallpaper may be directly acquired and an area block of the fuzzy wallpaper may be captured, so that a processing time for setting, by a system, the background of the UI control can be reduced. Moreover, loss of the internal memory of the terminal may be reduced by using the memory to save the fuzzy wallpaper. Besides, in the embodiments of the present invention, a black mask may also be superposed on the captured wallpaper area to ensure that the UI control on the wallpaper can be normally displayed on a wallpaper of any color. In addition, in the embodiments of the present invention, when a wallpaper area is captured, the whole fuzzy wallpaper may be also first sampled, and a size of the wallpaper area captured after the sampling is smaller, which may further reduce the loss of the internal memory of the terminal and save space of the internal memory.

FIG. 8 is a schematic structural composition diagram of an embodiment of a terminal according to the present invention. This terminal may be configured to execute a process of the method according to FIG. 1. Reference may be made to discussion on the method embodiment for same or corresponding special technical features of the terminal. In this embodiment, hardware composition of an apparatus for setting a background of a UI control is exemplified. As shown FIG. 8, the terminal may include an input/output apparatus 81, a memory 82, and a processor 83, where the input/output apparatus 81, the memory 82, and the processor 83 are connected by using a bus.

The input/output apparatus 81 is configured to interact with a user and receive an instruction input by the user or output data to the user. In specific implementation, the input/output apparatus 81 of this embodiment of the present invention may be an input/output apparatus such as a keyboard, a mouse, a photoelectric input apparatus, a sound input apparatus, a touch-based input apparatus, a scanner, a display, a speaker, or a printer.

The memory 82 is configured to save program data having various functions. In this embodiment of the present invention, the data stored in the memory 82 includes a fuzzy wallpaper, and program data that can be called and run by the processor 83. In specific implementation, the memory 82 of this embodiment of the present invention may be a system memory, for example, a volatile memory (such as a RAM), a nonvolatile memory (such as a ROM or a flash memory), or a combination thereof. In specific implementation, the memory 82 of this embodiment of the present invention may also be an external memory outside the system, for example, a magnetic disk, an optical disc, or a magnetic tape.

The processor 83 is configured to call the program data stored in the memory 82 and perform the following operations: acquiring, after a wallpaper of a terminal is updated, a fuzzy wallpaper obtained after fuzzy processing is performed on the updated wallpaper; capturing, according to a location of the UI control on a screen of the terminal, a wallpaper area block from the acquired fuzzy wallpaper; and setting the one captured wallpaper area block to a background of the UI control.

In some feasible implementation manners, the wallpaper includes a live wallpaper, and the processor 83 performs the operation of acquiring a fuzzy wallpaper obtained after fuzzy processing is performed on the updated wallpaper, which specifically includes:
acquiring a fuzzy wallpaper obtained after fuzzy processing is performed on each changing state of an updated live wallpaper.

In some feasible implementation manners, the processor 83 performs the operation of capturing, according to a location of the UI control on a screen of the terminal, a wallpaper area block from the acquired fuzzy wallpaper, which specifically includes: capturing, according to a location of the UI control on a touchscreen of the terminal, a wallpaper area block at a location corresponding to the location of the UI control from the acquired fuzzy wallpaper.

In some feasible implementation manners, when the processor 83 performs the operation of capturing a wallpaper area block from the acquired fuzzy wallpaper, multiple wallpaper area blocks are captured; and then the processor 83 performs the operation of setting the one captured wallpaper area block to a background of the UI control, which specifically includes: setting any wallpaper area block of the multiple captured wallpaper area blocks to the background of the UI control; or, setting the multiple wallpaper area blocks to the background of the UI control one by one according to a preset polling policy.

In some feasible implementation manners, the processor 83 further performs the following operation: before acquiring, after the wallpaper of the terminal is updated, a fuzzy wallpaper obtained after fuzzy processing is performed on the updated wallpaper, performing fuzzy processing on the updated wallpaper; or, when the terminal generates one wallpaper, performing fuzzy processing on the generated wallpaper.

In some feasible implementation manners, the processor 83 further performs the following operation: caching the fuzzy wallpaper obtained after the fuzzy processing is performed in internal memory of the terminal or saving the fuzzy wallpaper in a memory of the terminal, so as to acquire the fuzzy wallpaper obtained after fuzzy processing is performed on the updated wallpaper.

In some feasible implementation manners, before the processor 83 performs the operation of capturing, according to a location of the UI control on a screen of the terminal, a wallpaper area block from the acquired fuzzy wallpaper, the processor 83 further performs the following operations:
sampling the acquired fuzzy wallpaper and forming a new fuzzy wallpaper from sampled data; and
then, when the processor performs the operation of capturing, according to a location of the UI control on a screen of the terminal, a wallpaper area block from the acquired fuzzy wallpaper, capturing a wallpaper area block from the new fuzzy wallpaper formed from the sampled data.

In some feasible implementation manners, after the processor 83 performs the step of capturing a wallpaper area block from the fuzzy wallpaper, the processor 83 further performs the following step: superposing a black mask on the captured wallpaper area block. In addition, an embodiment of the present invention further provides a computer storage medium, where the computer storage medium may store a program, and, when the program is executed, a part or all of the steps of method according to the embodiment of the present invention may be performed. In specific implementation, the computer storage medium according to this embodiment of the present invention includes: a RAM, a ROM, an EEPROM, a flash memory, a CD-ROM, a DVD or another optical memory, a magnetic tape, a magnetic disk or another magnetic memory, or any other medium that can be configured to save required information and that can be accessed by a computer device.

## Claims

1. **A method** for displaying a user interface control on a screen of a device, the method comprising:
• updating a wallpaper of the device;
• acquiring a fuzzy wallpaper obtained after fuzzy processing is performed on the updated wallpaper (S110), wherein the fuzzy processing comprises performing a convolution on the updated wallpaper and a Gaussian normal distribution;
• displaying the user interface control at a first display area on the screen of the device (S 112), wherein the first display area corresponds to a first wallpaper area block of the fuzzy wallpaper, and a background of the first display area is the first wallpaper area block;
• moving the user interface control from the first display area on the screen to a second display area located at a different location from the first display area on the screen; and
• displaying the user interface control at the second display area, wherein the second display area corresponds to a second wallpaper area block different from the first wallpaper area block of the fuzzy wallpaper, and a background of the second display area is the second wallpaper area block.

2. The method according to claim 1, wherein the updated wallpaper comprises an updated live wallpaper, the updated live wallpaper being a wallpaper dynamically changed over time.

3. The method according to any one of claims 1 - 2, the method further comprising:
∘ caching the fuzzy wallpaper obtained after Gaussian fuzzy processing as the fuzzy processing is performed on the updated wallpaper in a first memory of the device, or,
∘ saving the fuzzy wallpaper in a second memory of the device.

4. The method according to any one of claims 1 - 3, wherein the fuzzy images of the first and second wallpaper area blocks are called by using a user interface, UI, background callback function to serve as the background of the corresponding first and second display areas.

5. The method according to any one of claims 1 - 4, the method further comprising: superimposing a black mask on the fuzzy images of the first and second wallpaper area blocks.

## Patentansprüche

1. Verfahren zum Anzeigen einer Benutzeroberflächensteuerung auf einem Bildschirm einer Vorrichtung, wobei das Verfahren Folgendes umfasst:
• Aktualisieren eines Bildschirmhintergrunds der Vorrichtung;
• Erfassen eines Fuzzy-Bildschirmhintergrunds, der nach Durchführen von Fuzzy-Verarbeitung an dem aktualisierten Bildschirmhintergrund erhalten wird (S 110), wobei die Fuzzy-Verarbeitung das Durchführen einer Faltung an dem aktualisierten Bildschirmhintergrund und einer gaußschen Normalverteilung umfasst;
• Anzeigen der Benutzeroberflächensteuerung in einem ersten Anzeigebereich auf dem Bildschirm der Vorrichtung (S 112), wobei der erste Anzeigebereich einem ersten Bildschirmhintergrundbereichsblock des Fuzzy-Bildschirmhintergrunds entspricht und ein Hintergrund des ersten Anzeigebereichs der erste Bildschirmhintergrundbereichsblock ist;
• Bewegen der Benutzeroberflächensteuerung von dem ersten Anzeigebereich auf dem Bildschirm zu einem zweiten Anzeigebereich, der sich an einer anderen Stelle als der erste Anzeigebereich auf dem Bildschirm befindet; und
• Anzeigen der Benutzeroberflächensteuerung in dem zweiten Anzeigebereich, wobei der zweite Anzeigebereich einem zweiten Bildschirmhintergrundbereichsblock entspricht, der sich von dem ersten Bildschirmhintergrundbereichsblock des Fuzzy-Bildschirmhintergrunds unterscheidet, und ein Hintergrund des zweiten Anzeigebereichs der zweite Bildschirmhintergrundbereichsblock ist.

2. Verfahren nach Anspruch 1, wobei der aktualisierte Bildschirmhintergrund einen aktualisierten Live-Bildschirmhintergrund umfasst, wobei der aktualisierte Live-Bildschirmhintergrund ein Bildschirmhintergrund ist, der sich im Laufe der Zeit dynamisch verändert.

3. Verfahren nach einem der Ansprüche 1-2, wobei das Verfahren ferner Folgendes umfasst:
o Zwischenspeichern des nach gaußscher Fuzzy-Verarbeitung erhaltenen Fuzzy-Bildschirmhintergrunds bei Durchführung der Fuzzy-Verarbeitung an dem aktualisierten Bildschirmhintergrund in einem ersten Speicher der Vorrichtung, oder
o Speichern des Fuzzy-Bildschirmhintergrunds in einem zweiten Speicher der Vorrichtung.

4. Verfahren nach einem der Ansprüche 1-3, wobei die Fuzzy-Bilder des ersten und des zweiten Bildschirmhintergrundbereichsblocks mittels einer Benutzerschnittstellen- bzw. UI-Hintergrund-Callback-Funktion aufgerufen werden, um als der Hintergrund des entsprechenden ersten und zweiten Anzeigebereichs zu dienen.

5. Verfahren nach einem der Ansprüche 1-4, wobei das Verfahren ferner Folgendes umfasst:
Überlagern der Fuzzy-Bilder des ersten und zweiten Bildschirmhintergrundbereichsblocks mit einer Schwarzmaske.

## Revendications

1. Procédé d'affichage d'une commande d'interface utilisateur sur un écran d'un dispositif, le procédé comprenant :
• la mise à jour d'un fond d'écran du dispositif ;
• l'acquisition d'un fond d'écran flou obtenu après qu'un traitement flou est effectué sur le fond d'écran mis à jour (S110), dans lequel le traitement flou comprend l'effection d'une convolution sur le fond d'écran mis à jour et une distribution normale gaussienne ;
• l'affichage de la commande d'interface utilisateur au niveau d'une première zone d'affichage sur l'écran du dispositif (S112), dans lequel la première zone d'affichage correspond à un premier bloc de zone de fond d'écran du fond d'écran flou, et un arrière-plan de la première zone d'affichage est le premier bloc de zone de fond d'écran ;
• le déplacement de la commande d'interface utilisateur de la première zone d'affichage sur l'écran vers une seconde zone d'affichage située à un endroit différent de la première zone d'affichage sur l'écran ; et
• l'affichage de la commande d'interface utilisateur dans la seconde zone d'affichage, dans lequel la seconde zone d'affichage correspond à un second bloc de zone de fond d'écran différent du premier bloc de zone de fond d'écran du fond d'écran flou, et un arrière-plan de la seconde zone d'affichage est le second bloc de zone de fond d'écran.

2. Procédé selon la revendication 1, dans lequel le fond d'écran mis à jour comprend un fond d'écran en direct mis à jour, le fond d'écran en direct mis à jour étant un fond d'écran qui change de manière dynamique au fil du temps.

3. Procédé selon l'une quelconque des revendications 1 et 2, le procédé comprenant en outre :
∘ la mise en cache du fond d'écran flou obtenu après le traitement flou gaussien lorsque le traitement flou est effectué sur le fond d'écran mis à jour dans une première mémoire du dispositif, ou,
∘ l'enregistrement du fond d'écran flou dans une seconde mémoire du dispositif.

4. Procédé selon l'une quelconque des revendications 1 à 3, dans lequel les images floues des premier et second blocs de zone de fond d'écran sont appelées à l'aide d'une fonction de rappel d'arrière-plan d'interface utilisateur, UI, pour servir d'arrière-plan aux première et seconde zones d'affichage correspondantes.

5. Procédé selon l'une quelconque des revendications 1 à 4, le procédé comprenant en outre : la superposition d'un masque noir sur les images floues des premier et second blocs de zone de fond d'écran.
